# EUROPEAN PATENT APPLICATION

(11) **EP 4 496 057 A2**
(43) Date of publication of application: **22.01.2025**
(21) Application number: 24186917.1
(22) Date of filing: 05.07.2024
(51) Int. Cl.: H01M 10/04, H01M 50/103, H01M 50/107

(54) **ELECTROCHEMICAL DEVICE AND ELECTRICAL DEVICE**

(30) Priority: 07.07.2023 CN 202310833548
(71) Applicant: Ningde Amperex Technology Ltd., Ningde City, Fujian 352100 (CN)
(72) Inventor: LI, Chenchen, Ningde City, Fujian 352100 (CN)
(74) Representative: Icosa

(57) **Abstract**

An electrochemical device (1) includes a package (13) and a battery cell body (11). The battery cell body (11) is accommodated in the package (13). A first receptacle (1111) is created on an outer surface of the battery cell body (11). The electrochemical device (1) further includes a first bonding piece (12). The first bonding piece (12) is at least partially accommodated in the first receptacle (1111). The first bonding piece (12) is bonded and fixed to an inner surface of the package (13) and the battery cell body (11) separately. In this way, on the premise of ensuring stability of the bonding between the battery cell body (11) and the package (13) by ensuring a sufficient thickness of the first bonding piece (12), this application can reduce a protruding thickness of the first bonding piece (12) that protrudes out of the first receptacle (1111), thereby increasing the energy density of the electrochemical device (1).

## Description

### TECHNICAL FIELD

This application relates to the field of battery technology, and in particular, to an electrochemical device and an electrical device.

### BACKGROUND

On a surface of a conventional electrochemical device, a hot-melt adhesive tape is bonded, and then the electrochemical device is put into a packaging bag, and the electrochemical device is bonded and fixed to the packaging bag by the hot-melt adhesive. To minimize the thickness of a battery cell body and increase an energy density of the electrochemical device, the hot-melt adhesive tape is usually thinned to an extreme extent. However, the thinner the hot-melt adhesive tape, the weaker the bonding properties of the adhesive tape. The low thickness of the hot-melt adhesive tape is prone to cause debonding of the electrochemical device from the packaging bag, and then cause a series of problems such as a micro-short-circuit between a positive electrode and a negative electrode, shrinkage of a separator, and voltage-drop-induced failure.

### SUMMARY

A main objective of this application is to provide an electrochemical device and an electrical device. On the premise of ensuring stability of the bonding between a battery cell body and a package by ensuring a sufficient thickness of a first bonding piece, this application can reduce a protruding thickness of the first bonding piece that protrudes out of a first receptacle, thereby increasing the energy density of the electrochemical device.

To achieve the above objective, one technical solution disclosed in an embodiment of this application is to provide an electrochemical device. The electrochemical device includes a package, a battery cell body, and a first bonding piece. The battery cell body is accommodated in the package. A first receptacle is created on an outer surface of the battery cell body. The first bonding piece is at least partially accommodated in the first receptacle. The first bonding piece is bonded and fixed to an inner surface of the package and the battery cell body separately. In this embodiment, the first bonding piece is at least partially accommodated in the first receptacle, thereby reducing the protruding thickness of the first bonding piece that protrudes from the battery cell body. The battery cell body can be filled with more active materials, thereby increasing the energy density of the electrochemical device.

Optionally, the first bonding piece includes a first adhesive layer, a substrate, and a second adhesive layer. The first adhesive layer and the second adhesive layer are fixed to two surfaces of the substrate respectively. The first adhesive layer is bonded and fixed to the battery cell body. The second adhesive layer is bonded and fixed to the package. In this embodiment, the first bonding piece includes a first adhesive layer and a second adhesive layer. In other words, the two surfaces of the first bonding piece may vary in bonding properties, so that the first bonding piece can employ a first adhesive layer and a second adhesive layer of different bonding properties as required by the use scenario. Optionally, the second adhesive layer is hot-melt adhesive. In this embodiment, the second adhesive layer is hot-melt adhesive, and the bonding properties of the hot-melt adhesive are activated under heating conditions. The hot-melt adhesive can be prevented from adhering to the package in a process of loading the battery cell body into the package.

Optionally, the battery cell body includes a first electrode plate, a separator, and a second electrode plate. The first electrode plate, the separator, and the second electrode plate are stacked in sequence and then wound together. An outer surface of the first electrode plate on a terminating coil constitutes a part of the outer surface of the battery cell body. The first receptacle is created on the outer surface of the first electrode plate on the terminating coil. The outer surface of the first electrode plate on the terminating coil is a surface of the first electrode plate on the terminating coil, the surface being oriented away from the second electrode plate. In this embodiment, with the first receptacle created on the outer surface of the first electrode plate on the terminating coil, the first bonding piece can be exposed on the outer surface of the battery cell body, so as to make it convenient to bond and fix the first bonding piece to the package.

Optionally, a second receptacle is created on the second electrode plate. Along a thickness direction of the battery cell body, a projection of the second receptacle at least partially overlaps a projection of the first receptacle. Along the thickness direction of the battery cell body, the first receptacle and the second receptacle are located on a same side of the second electrode plate on a starting coil. In this embodiment, with the second receptacle created, the second receptacle can avoid at least a part of the first bonding piece and the first receptacle. When the first electrode plate or the second electrode plate expands in volume due to repeated charging and discharging of the electrochemical device, the second receptacle can avoid at least a part of the first bonding piece and the first receptacle, thereby reducing the risk that the first bonding piece squeezes the package to cause bulges on the outer surface of the package. Optionally, the second receptacle is created at a terminating coil of the second electrode plate.

Optionally, along the thickness direction of the battery cell body, a projection of the first receptacle lies within a projection of the second receptacle. Therefore, when the first electrode plate or the second electrode plate expands, the first bonding piece and the first receptacle can be partially accommodated in the second receptacle, thereby reducing the risk that the first bonding piece squeezes the package to cause bulges on the outer surface of the package.

Optionally, the battery cell body further includes a second bonding piece. The second bonding piece is bonded and fixed to a terminating end of the terminating coil of the first electrode plate and the first bonding piece separately, thereby improving the stability of winding the first electrode plate, the separator, and the second electrode plate.

Optionally, the battery cell body includes a planar portion, a first arc-shaped portion, and a second arc-shaped portion. Along a width direction of the battery cell body, the planar portion is located between the first arc-shaped portion and the second arc-shaped portion, and the first receptacle is located on the planar portion. In this embodiment, the first receptacle is located on the planar portion, thereby facilitating bonding and fixation between the first bonding piece and the bottom of the first receptacle as well as bonding and fixation between the first bonding piece and the package.

Optionally, the battery cell body includes first electrode plates, separators, and second electrode plates. A number of the first electrode plates, a number of the separators, and a number of the second electrode plates are all plural. The first electrode plates and the second electrode plates are stacked alternately. One first electrode plate and one second electrode plate that are adjacent to each other are interspaced with one separator. Along a stacking direction of the first electrode plates and the second electrode plates, an electrode plate located outermost on the battery cell body is a first electrode plate. The first receptacle is created on the outermost first electrode plate. In this embodiment, the first electrode plates, the separators, and the second electrode plates are stacked together without requiring a second bonding piece, thereby reducing the required amount of the bonding piece.

Optionally, a second receptacle is created on the second electrode plate. Along the stacking direction of the first electrode plates and the second electrode plates, a projection of the second receptacle at least partially overlaps a projection of the first receptacle. In this embodiment, with the second receptacle created, the second receptacle can avoid at least a part of the first bonding piece and the first receptacle. When the first electrode plate or the second electrode plate expands in volume due to repeated charging and discharging of the electrochemical device, the second receptacle can avoid at least a part of the first bonding piece and the first receptacle, thereby reducing the risk that the first bonding piece squeezes the package to cause bulges on the outer surface of the package.

Optionally, the second receptacle is created on a second electrode plate closest to the outermost first electrode plate. Therefore, when the first electrode plate or the second electrode plate expands, the first bonding piece and the first receptacle can be partially accommodated in the second receptacle, thereby reducing the risk that the first bonding piece squeezes the package to cause bulges on the outer surface of the package.

Optionally, along a thickness direction of the battery cell body, a width of a projection of the first receptacle is greater than or equal to 1/3 of a width of a projection of the battery cell body; and/or, along a thickness direction of the battery cell body, a length of a projection of the first receptacle is greater than or equal to 1/3 of a length of a projection of the battery cell body.

Optionally, a depth of the first receptacle is greater than or equal to 2/3 of a thickness of the first bonding piece and less than or equal to the thickness of the first bonding piece.

Optionally, the depth of the first receptacle is 15 µm, and/or, the width of the first receptacle is 36 mm, and/or, the length of the first receptacle is 61 mm.

Optionally, a length of the first bonding piece is not greater than a length of the first receptacle, and a width of the first bonding piece is not greater than a width of the first receptacle.

Optionally, the thickness of the first bonding piece is 20 µm, and/or, the width of the first bonding piece is 35 mm, and/or, the length of the first bonding piece is 60 mm. To achieve the foregoing objective, another technical solution disclosed in an embodiment of this application is to provide an electrical device. The electrical device includes the electrochemical device disclosed above.

The beneficial effects of some embodiments of this application are as follows: Different from the prior art, this application lets the battery cell body be accommodated in the package, the first bonding piece is bonded and fixed to the inner surface of the package and the battery cell body separately, a first receptacle is created on the outer surface of the battery cell body, and the first bonding piece is at least partially accommodated in the first receptacle. Therefore, on the premise of ensuring stability of the bonding between the battery cell body and the package by ensuring a sufficient thickness of the first bonding piece, this application can reduce the protruding thickness of the first bonding piece that protrudes out of the first receptacle, thereby increasing the energy density of the electrochemical device.

### BRIEF DESCRIPTION OF DRAWINGS

To describe the technical solutions in the specific embodiments of this application or the prior art more clearly, the following outlines the drawings that need to be used in the descriptions of the specific embodiments of this application or the prior art. In all the drawings, similar elements or parts are generally identified by similar reference numerals. The elements or parts in the drawings are not necessarily drawn to scale.
FIG. 1 is a cross-sectional schematic view of an electrochemical device according to Embodiment 1 of this application;
FIG. 2 is a close-up view of a region A shown in FIG. 1;
FIG. 3 is a schematic structural diagram of a first bonding piece according to an embodiment of this application;
FIG. 4 is a schematic diagram of projections of a battery cell body, a first bonding piece, and a second bonding piece along a direction X according to an embodiment of this application;
FIG. 5 is a cross-sectional schematic view of a battery cell body, a first bonding piece, and a second bonding piece according to Embodiment 1 of this application;
FIG. 6 is a cross-sectional schematic view of a battery cell body, a first bonding piece, and a third bonding piece according to Embodiment 2 of this application;
FIG. 7 is a cross-sectional schematic view of a battery cell body and a first bonding piece according to Embodiment 3 of this application;
FIG. 8 is a cross-sectional schematic view of a battery cell body, a first bonding piece, and a third bonding piece according to Embodiment 4 of this application;
FIG. 9 is a cross-sectional view of an electrochemical device that has not been charged or discharged according to Embodiment 4 of this application;
FIG. 10 is a cross-sectional schematic view of an electrochemical device according to Embodiment 5 of this application;
FIG. 11 is a schematic diagram of projections of a battery cell body and a first bonding piece along a direction Z according to Embodiment 5 of this application;
FIG. 12 is a cross-sectional schematic view of a battery cell body, a first bonding piece, and a third bonding piece according to Embodiment 6 of this application;
FIG. 13 is a cross-sectional view of an electrochemical device that has not been charged or discharged according to Embodiment 6 of this application; and
FIG. 14 is a cross-sectional schematic view of an electrochemical device according to a comparative embodiment of this application.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. A direction or a positional relationship indicated by the terms such as "up", "down", "in", "out", "vertical", and "horizontal" used herein is a direction or positional relationship based on the illustration in the drawings, and is merely intended for ease or brevity of describing this application, but does not indicate or imply that the indicated device or component is necessarily located in the specified direction or constructed or operated in the specified direction. Therefore, such terms are not construed as a limitation on this application. In addition, the terms "first" and "second" are merely used for descriptive purposes, but not construed as indicating or implying relative importance.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

### Embodiment 1

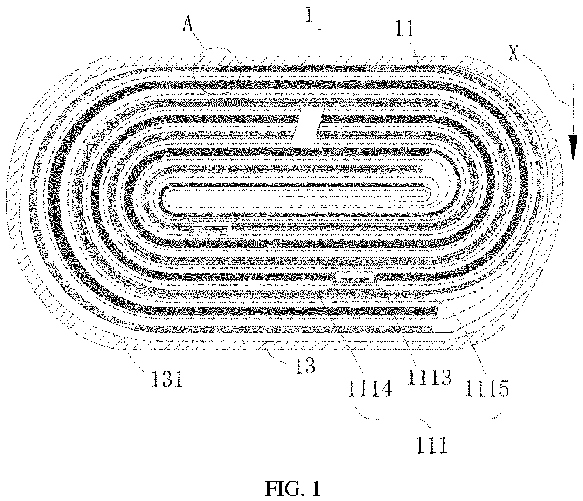

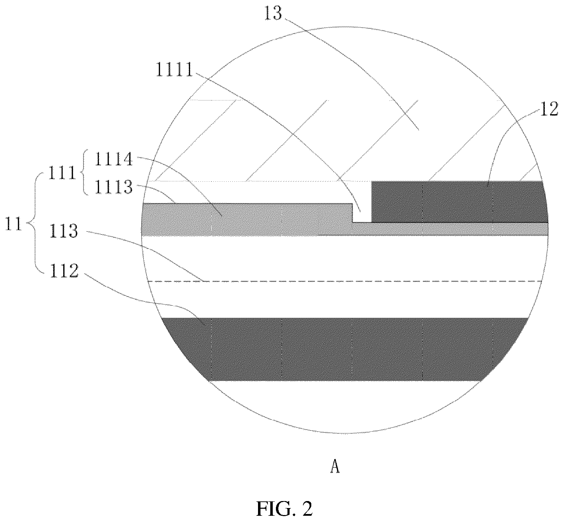

Referring to FIG. 1 and FIG. 2, the electrochemical device 1 includes: a battery cell body 11, a first bonding piece 12, and a package 13. A first receptacle 1111 is created on the battery cell body 11. The first bonding piece 12 is at least partially accommodated in the first receptacle 1111. A first surface of the first bonding piece 12 is bonded and fixed to the bottom of the first receptacle 1111. An accommodation cavity 131 is created in the package 13. The accommodation cavity 131 is configured to accommodate the battery cell body 11 and the first bonding piece 12. A second surface of the first bonding piece 12 is bonded and fixed to an inner wall of the package 13, thereby fixing the battery cell body 11 to the package 13. The first surface is opposite to the second surface. With the first receptacle 1111 created on the battery cell body 11, the first bonding piece 12 is at least partially accommodated in the first receptacle 1111, thereby reducing the protruding thickness of the first bonding piece 12 that protrudes from the battery cell body 11. In other words, when the internal space of the accommodation cavity 131 is constant, along the thickness direction X of the battery cell body 11, the space occupied by the first bonding piece 12 in the accommodation cavity 131 is reduced, thereby allowing for a greater thickness of the battery cell body 11, and in turn, increasing the energy density of the electrochemical device 1.

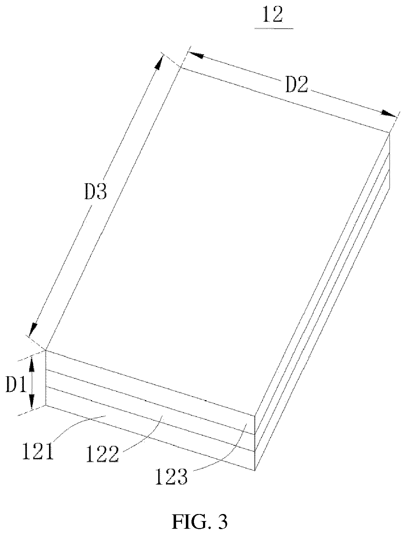

Further, referring to FIG. 2 and FIG. 3, the first bonding piece 12 includes a first adhesive layer 121, a substrate 122, and a second adhesive layer 123. The first adhesive layer 121 and the second adhesive layer 123 are fixed to two opposite surfaces of the substrate 122 respectively. The first adhesive layer 121 is bonded and fixed to the bottom of the first receptacle 1111, and the second adhesive layer 123 is bonded and fixed to the inner surface of the package 13. In other words, the two surfaces of the first bonding piece 12 may vary in bonding properties, so that the first bonding piece 12 can employ a first adhesive layer 121 and a second adhesive layer 122 of different bonding properties as required by the use scenario.

Specifically, the first adhesive layer 121 is ordinary adhesive that exhibits bonding properties at normal temperature. The second adhesive layer 123 is hot-melt adhesive with bonding properties activated only under heating conditions. A surface, oriented away from the substrate 122, of the first adhesive layer 121 is a first surface of the first bonding piece 12. A surface, oriented away from the substrate 122, of the second adhesive layer 123 is a second surface of the first bonding piece 12. Therefore, before the battery cell body 11 is loaded into the accommodation cavity 131 of the package 13, the first adhesive layer 121 may be bonded and fixed to the bottom of the first receptacle 1111 first, thereby preventing the first bonding piece 12 from being detached from the first receptacle 1111 in a process of loading the battery cell body 11 into the accommodation cavity 131 of the package 13. In the process of loading the battery cell body 11 into the accommodation cavity 131 of the package 13, the second adhesive layer 123 exhibits no bonding properties, and does not adhere to the package 13, thereby reducing the difficulty of loading the battery cell body 11 into the package 13. After the battery cell body 11 is loaded into the accommodation cavity 131, the bonding properties of the second adhesive layer 123 can be activated by heating the electrochemical device 1, so as to bond and fix the second surface to the inner wall of the package 13.

In some embodiments, the thickness D1 of the first bonding piece 12 is 20 µm, and/or, the width D2 of the first bonding piece 12 is 35 mm, and/or, the length D3 of the first bonding piece 12 is 60 mm.

The battery cell body 11 includes a first electrode plate 111, a second electrode plate 112, and a separator 113. The first electrode plate 111, the separator 113, and the second electrode plate 112 are stacked in sequence and then wound together. An outer surface of the first electrode plate 111 on a terminating coil constitutes a part of the outer surface of the battery cell body 11. The first receptacle 1111 is created on the outer surface of the first electrode plate 111 on the terminating coil. The first bonding piece 12 is at least partially accommodated in the first receptacle 1111. The outer surface of the first electrode plate 111 on the terminating coil is a surface of the first electrode plate 111 on the terminating coil, the surface being oriented away from the second electrode plate 112. With the first receptacle 1111 created on the terminating coil of the first electrode plate 111, the first bonding piece 12 can be exposed on the outer surface of the battery cell body 11, so as to make it convenient to fix the first bonding piece 12 to the inner wall of the package 13. The first electrode plate 111 and the second electrode plate 112 are of opposite polarities. For example, the first electrode plate 111 is a positive electrode plate, and the second electrode plate 112 is a negative electrode plate; or, the first electrode plate 111 is a negative electrode plate, and the second electrode plate 112 is a positive electrode plate.

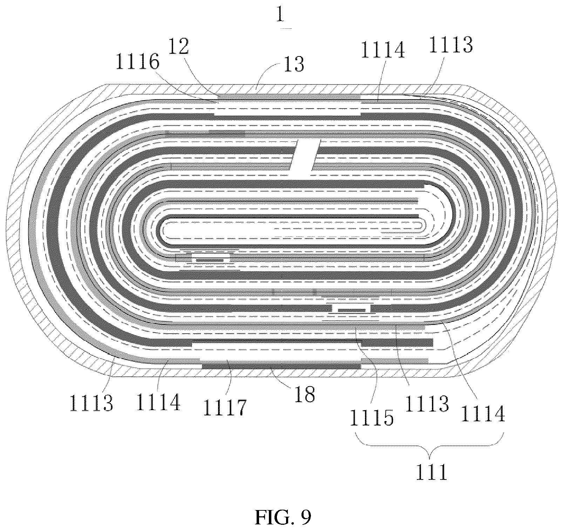

It is worth noting that, referring to FIG. 9, FIG. 9 shows an electrochemical device that has not been charged or discharged, in which the first electrode plate 111 includes a first current collector 1114, a substrate 1113, and a second current collector 1115. The first current collector 1114 and the second current collector 1115 are disposed on two sides of the substrate 1113 respectively. No second current collector 1115 is disposed on the terminating coil of the first electrode plate 111. A first groove 1116 is created on the first current collector 1114 located on the terminating coil of the first electrode plate 111. The first bonding piece 12 is bonded and fixed to the substrate 1113 of the first electrode plate 111 on the terminating coil. Along the thickness direction X of the battery cell body 11, the projection of the first bonding piece 12 fully lies within the projection of the first groove 1116. When the battery cell body 11 is charged and discharged, the negative electrode plate expands in volume. Consequently, the first electrode plate 111 squeezes the first bonding piece 12 toward the inner surface of the package 13. Under the action of the package 13 and the first bonding piece 12, the substrate 1113 located on the terminating coil gradually sinks into the first groove 1116, so that the first electrode plate 111 forms the first receptacle 1111 shown in FIG. 2. Further, along the thickness direction X of the battery cell body 11, the depth of the first receptacle 1111 is greater than or equal to 2/3 of the thickness of the first bonding piece 12 and less than or equal to the thickness of the first bonding piece 12. In other words, when the first surface of the first bonding piece 12 is affixed to the bottom of the first receptacle 1111, the second surface of the first bonding piece 12 can protrude from the outer surface of the first electrode plate 111 on the terminating coil, so as to make it convenient to bond and fix the first bonding piece 12 to the inner surface of the package 13.

Further, along the thickness direction X of the battery cell body 11, the depth of the first receptacle 1111 is greater than or equal to 2/3 of the thickness of the first bonding piece 12 and less than or equal to 4/5 of the thickness of the first bonding piece 12. Therefore, when the second surface of the first bonding piece 12 is bonded and fixed to the inner surface of the package 13, a clearance exists between the outer surface of the battery cell body 11 and the inner surface of the package 13, where the outer surface is a surface on which the first receptacle 1111 is located. After the electrochemical device 1 is charged and discharged repeatedly for a plurality of cycles, the negative electrode plate expands in volume, thereby resulting in an increase in the thickness of the battery cell body 11. The clearance between the battery cell body 11 and the inner surface of the package 13 reduces the risk of expansion of the package 13.

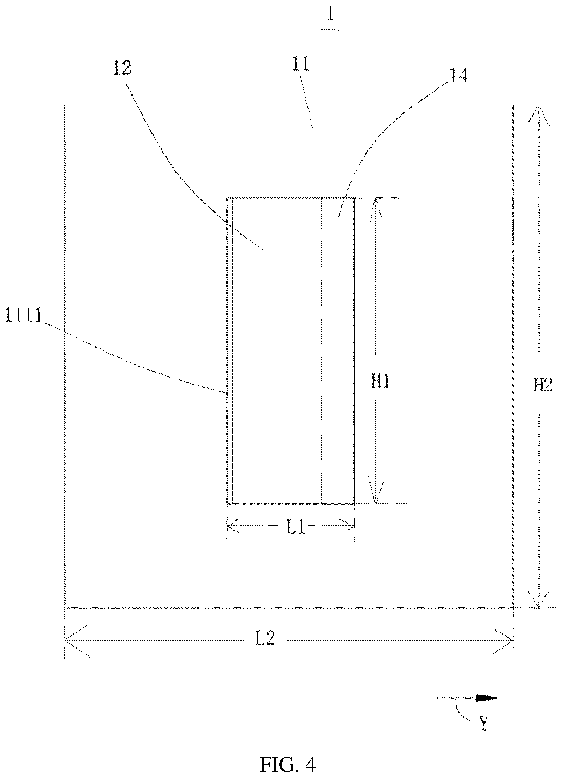

In some embodiments, referring to FIG. 4, the dashed line in FIG. 4 denotes a boundary between the first bonding piece 12 and a second bonding piece 14. The battery cell body 11 further includes a second bonding piece 14. The second bonding piece 14 is at least partially accommodated in the first receptacle 1111. A surface of the second bonding piece 14 is bonded and fixed to the bottom of the first receptacle 1111. The other surface of the second bonding piece 14 is bonded and fixed to the terminating end of the terminating coil of the first electrode plate 111 to prevent loosening of the battery cell body 11 wound in shape.

In some embodiments, the first bonding piece 12 and the second bonding piece 14 are formed in one piece.

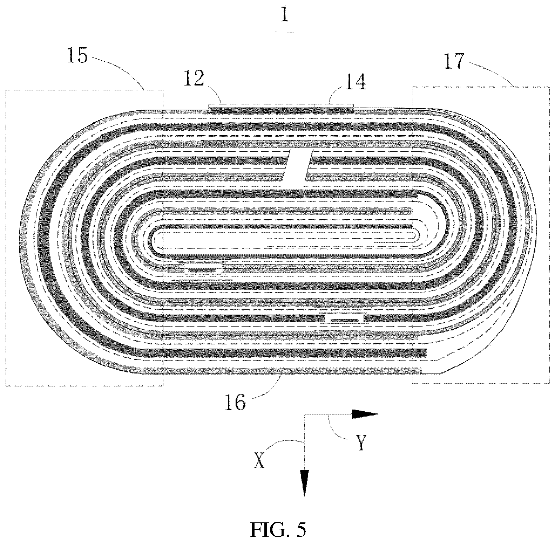

In some embodiments, referring to FIG. 1 and FIG. 5, along the width direction Y of the battery cell body 11, the battery cell body 11 is divided into a first arc-shaped portion 15, a planar portion 16, and a second arc-shaped portion 17. The planar portion 16 is located between the first arc-shaped portion 15 and the second arc-shaped portion 17. The first receptacle 1111 is disposed on the planar portion 16. Compared with the arrangement in which the first receptacle 1111 is disposed on the first arc-shaped portion 15 or the second arc-shaped portion 17, disposing the first receptacle 1111 on the planar portion 16 makes it convenient to affix the first bonding piece 12 and the second bonding piece 14 onto the bottom of the first receptacle 1111. In addition, after the battery cell body 11 is loaded into the accommodation cavity 131 of the package 13, this arrangement makes it convenient for the second surface of the first bonding piece 12 to snugly fit the inner surface of the package 13, thereby ensuring the stability of the bonding between the first bonding piece 12 and the package 13. However, if the first receptacle 1111 is disposed on the first arc-shaped portion 15 or the second arc-shaped portion 17, it is difficult to ensure that the first bonding piece 12 snugly fits the inner surface of the package 13, thereby being prone to cause instability of bonding between the first bonding piece 12 and the package 13.

In some embodiments, referring to FIG. 1 and FIG. 4, along the thickness direction X of the battery cell body 11, the width L1 of a projection of the first receptacle 1111 is greater than or equal to 1/3 of the width L2 of a projection of the battery cell body 11; and/or, along the thickness direction X of the battery cell body 11, the length H1 of a projection of the first receptacle 1111 is greater than or equal to 1/3 of the length H2 of a projection of the battery cell body 11. The maximum length of the first bonding piece 12 may be the same as the length H1 of the first receptacle 1111. The maximum sum of the widths of the first bonding piece 12 and the second bonding piece 14 may be the same as the width L1 of the first receptacle 1111. Therefore, a sufficient bonding area is ensured for bonding and fixing the first bonding piece 12 to the inner surface of the package 13, thereby ensuring the stability of the fixation between the first bonding piece 12 and the package 13.

Further, the width L1 of the first receptacle 1111 is 36 mm, and/or, the length of the first receptacle 1111 is 61 mm, and/or, the depth of the first receptacle 1111 is 15 µm.

In this embodiment, the first bonding piece 12 is at least partially accommodated in the first receptacle 1111, thereby reducing the space occupied by the first bonding piece 12 in the accommodation cavity 131 in the direction X, allowing for a greater thickness of the battery cell body 11, and in turn, increasing the energy density of the electrochemical device 1.

### Embodiment 2

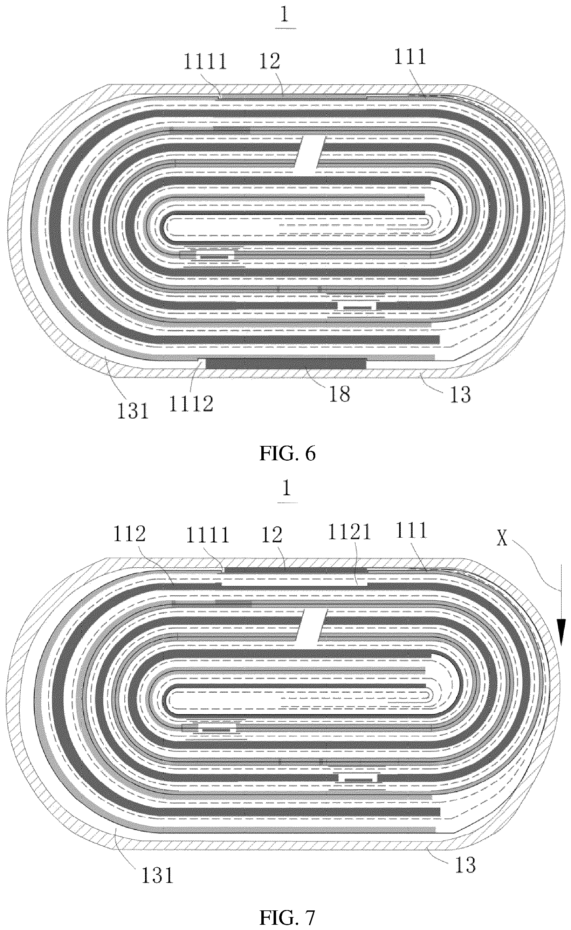

Referring to FIG. 6, Embodiment 2 differs from Embodiment 1 in that the electrochemical device 1 further includes a third bonding piece 18, a third receptacle 1112 is further created on the first electrode plate 111, and the third bonding piece 18 is at least partially accommodated in the third receptacle 1112. The first bonding piece 12 and the third bonding piece 18 are configured to jointly fix the battery cell body 11 into the accommodation cavity 131 of the package 13. The third receptacle 1112 is disposed on the terminating coil of the first electrode plate 111. The first receptacle 1111 and the second receptacle 1112 are located on two opposite surfaces of the planar portion respectively.

It is worth noting that, referring to FIG. 9, a second groove 1117 is created on the first current collector 1114 of the first electrode plate 111 on the terminating coil. The third bonding piece 18 is bonded and fixed to the substrate 1113 of the first electrode plate 111 on the terminating coil. Along the thickness direction X of the battery cell body 11, the projection of the third bonding piece 18 fully lies within the projection of the second groove 1117. The first bonding piece 12 and the third bonding piece 18 are located on two sides of the second electrode 112 on the starting coil respectively. When the battery cell body 11 is charged and discharged, the negative electrode plate expands in volume. Consequently, the first electrode plate 111 squeezes the third bonding piece 18 toward the inner surface of the package 13. Under the action of the package 13 and the third bonding piece 18, the substrate 1113 located on the terminating coil gradually sinks into the second groove 1117, so that the first electrode plate 111 forms the second receptacle 1112 shown in FIG. 6.

In this embodiment, with the third receptacle 1112 disposed, the third bonding piece 18 is at least partially accommodated in the third receptacle 1112. The first bonding piece 12 and the third bonding piece 18 jointly bond and fix the battery cell body 11 to the package 13, thereby improving the stability of the bonding and fixation between the battery cell body 11 and the package 13, and ensuring the safety of the electrochemical device 1.

### Embodiment 3

Referring to FIG. 7, Embodiment 3 differs from Embodiment 1 in that: a second receptacle 1121 is created on the second electrode plate 112; along the thickness direction X of the battery cell body 11, a projection of the second receptacle 1121 at least partially overlaps a projection of the first receptacle 1111; and, along the thickness direction X of the battery cell body 11, the first receptacle 1111 and the second receptacle 1121 are located on the same side of the second electrode plate 112 on the starting coil. After the electrochemical device 1 is charged and discharged repeatedly for a plurality of cycles, the negative electrode plate expands along the direction X and an opposite direction of the direction X benchmarked against the starting coil of the second electrode plate 112. For lack of a clearance between the first bonding piece 12 and the inner surface of the package 13, the expanded negative electrode plate pushes the first bonding piece 12 to move along the direction X, thereby being prone to form a bulge on the outer surface of the package 13 at the first bonding piece 12. Therefore, by disposing the second receptacle 1121, positioning the first receptacle 1111 and the second receptacle 1121 on the same side of the second electrode plate 112 on the starting coil, and making the projection of the second receptacle 1121 at least partially overlap the projection of the first receptacle 1111 along the direction X, the second receptacle 1121 can avoid at least a part of the first receptacle 1111 when the negative electrode plate expands. In this way, the first bonding piece 12 accommodated in this part of the first receptacle 1111 is prevented from bulging toward the package 13, thereby reducing the area of the bulge formed on the outer surface of the package 13 at the first bonding piece 12.

Further, along the thickness direction X of the battery cell body 11, the projection of the first receptacle 1111 lies within the projection of the second receptacle 1121. Therefore, when the negative electrode plate expands, the second receptacle 1121 can avoid the first receptacle 1111, thereby reducing the risk that the first bonding piece 12 accommodated in the first receptacle 1111 squeezes the package 13, and in turn, reducing the risk of forming a bulge on the outer surface of the package 13 at the first bonding piece 12.

In some embodiments, the second receptacle 1121 is created on the terminating coil of the second electrode plate 112, and the second receptacle 1121 is located on a surface of the second electrode plate 112 on the terminating coil, where the surface is oriented toward the terminating coil of the first electrode plate 111. Therefore, when the negative electrode plate expands, the first receptacle 1111 and the first bonding piece 12 can be directly accommodated into the second receptacle 1121, thereby reducing the risk of forming a bulge on the outer surface of the package 13 at the first bonding piece 12. In addition, because the first electrode plate 111 is thinned at a part provided with the first receptacle 1111, the second receptacle 1121 also thins the second electrode plate 112 at a part corresponding to the part of the first electrode plate 111 at which the first receptacle 1111 is provided, thereby reducing the risk that some ions are precipitated due to an imbalance between the number of anions and the number of cations at the first receptacle 1111 of the battery cell body 11.

It is worth noting that the second receptacle 1121 may be created at another position outside the terminating coil of the second electrode plate 112 instead, as long as the first receptacle 1111 and the second receptacle 1121 are located on the same side of the second electrode plate 112 on the starting coil, and as long as the projection of the first receptacle 1111 lies within the projection of the second receptacle 1121 along the direction X. This also enables the second receptacle 1121 to avoid the first receptacle 1111 and the first bonding piece 12.

In this embodiment, by creating the second receptacle 1121, and the projection of the first receptacle 1111 at least partially overlaps the projection of the second receptacle 1121 along the direction X. Therefore, when the negative electrode plate expands after the battery cell body 11 is charged and discharged for a plurality of cycles, the second receptacle 1121 can avoid at least a part of the first receptacle 1111 and the first bonding piece 12, thereby reducing the area of the bulge formed on the outer surface of the package 13 at the first bonding piece 12.

### Embodiment 4

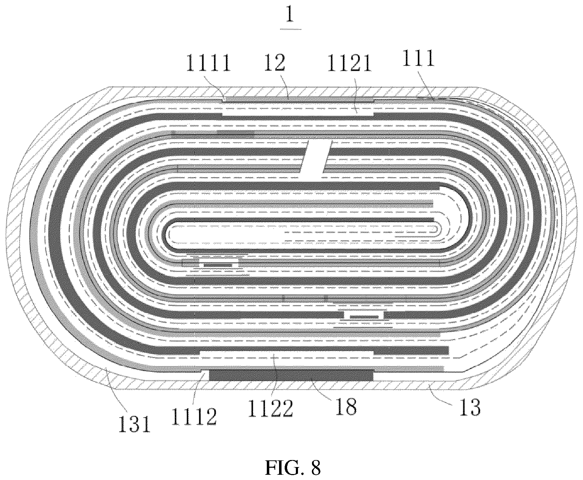

Referring to FIG. 8, Embodiment 4 differs from Embodiment 3 in that the electrochemical device 1 further includes a third bonding piece 18, a third receptacle 1112 is created on the first electrode plate 111 on the terminating coil, a fourth receptacle 1122 is created on the second electrode plate 111 on the terminating coil, and the third bonding piece 18 is at least partially accommodated in the third receptacle 1112. The first bonding piece 12 and the third bonding piece 18 are configured to jointly fix the battery cell body 11 into the package 13. The third receptacle 1112 and the first receptacle 1111 are located on two opposite surfaces of the planar portion 16 respectively, and the third receptacle 1112 and the fourth receptacle 1122 are located on the same side of the second electrode plate 112 on the starting coil. The projection of the third receptacle 1112 at least partially overlaps the projection of the fourth receptacle 1122 along the direction X. Therefore, when the negative electrode plate expands after the battery cell body 11 is charged and discharged for a plurality of cycles, the fourth receptacle 1122 can avoid at least a part of the third receptacle 1112 and the third bonding piece 18, thereby reducing the area of the bulge formed on the outer surface of the package 13 at the third bonding piece 18.

In this embodiment, with the third receptacle 1112 disposed, the third bonding piece 18 is at least partially accommodated in the third receptacle 1112. The first bonding piece 12 and the third bonding piece 18 jointly bond and fix the battery cell body to the package 13, thereby improving the stability of the bonding and fixation between the battery cell body and the package 13, and ensuring the safety of the electrochemical device 1.

### Embodiment 5

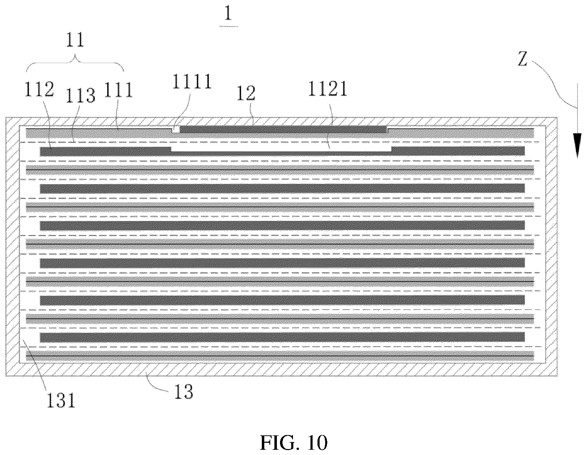

Referring to FIG. 10, the electrochemical device 1 includes a battery cell body 11, a first bonding piece 12, and a package 13. The battery cell body 11 includes a plurality of first electrode plates 111, a plurality of separators 113, and a plurality of second electrode plates 112. The plurality of first electrode plates 111 and the plurality of second electrode plates 112 are stacked alternately in sequence. One first electrode plate 111 and one second electrode plate 112 that are adjacent to each other are interspaced with one separator 113. Along a stacking direction Z of the first electrode plates 111 and the second electrode plates 112, an electrode plate located outermost on the battery cell body 11 is a first electrode plate 111. A first receptacle 1111 is created on the outermost first electrode plate 111. The first bonding piece 12 is at least partially accommodated in the first receptacle 1111. A first surface of the first bonding piece 12 is bonded and fixed to the bottom of the first receptacle 1111. An accommodation cavity 131 is created in the package 13. The accommodation cavity 131 is configured to accommodate the battery cell body 11 and the first bonding piece 12. A second surface of the first bonding piece 12 is bonded and fixed to an inner wall of the package 13, thereby fixing the battery cell body 11 to the package 13. The first surface is opposite to the second surface. With the first receptacle 1111 created on the outermost first electrode plate 111, the first bonding piece 12 is at least partially accommodated in the first receptacle 1111, thereby reducing the protruding thickness of the first bonding piece 12 that protrudes from the battery cell body 11. In other words, when the internal space of the accommodation cavity 131 is constant, along the stacking direction Z of the first electrode plates 111 and the second electrode plates 112, the space occupied by the first bonding piece 12 in the accommodation cavity 131 is reduced, thereby allowing for a greater thickness of the battery cell body 11, and in turn, increasing the energy density of the electrochemical device 1.

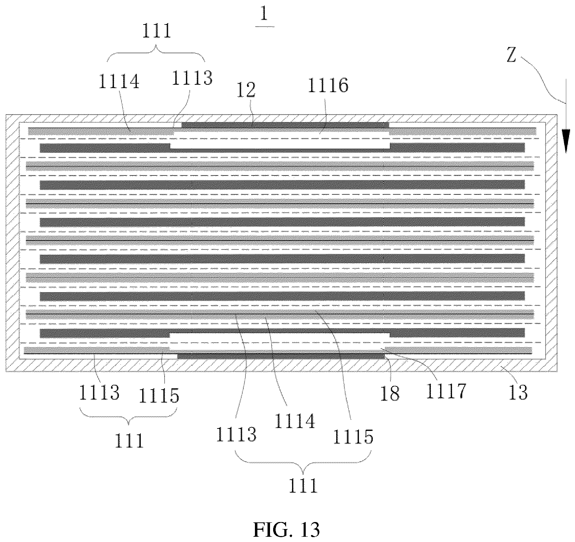

It is worth noting that, referring to FIG. 13, FIG. 13 shows an electrochemical device that has not been charged or discharged, and the first electrode plate 111 located in the middle of the battery cell body 11 includes a substrate 1113, a first current collector 1114, and a second current collector 1115. The first current collector 1114 and the second current collector 1115 are located on two sides of the substrate 1113 respectively. The one first electrode plate 111 located outermost on the battery cell body 11 includes just a substrate 1113 and a first current collector 1114, without a second current collector 1115. In addition, the substrate 1113 of the outermost first electrode plate 111 constitutes an outer surface of the battery cell body 11. A first groove 1116 is created on the first current collector 1114 of the outermost first electrode plate 111. The first bonding piece 12 is bonded and fixed to the substrate 1113 of the outermost first electrode plate 111. Along the thickness direction X of the battery cell body 11, the projection of the first bonding piece 12 fully lies within the projection of the first groove 1116. When the battery cell body 11 is charged and discharged, the negative electrode plate expands in volume. Consequently, the first electrode plate 111 squeezes the first bonding piece 12 toward the inner surface of the package 13. Under the action of the package 13 and the first bonding piece 12, the outermost substrate 1113 gradually sinks into the first groove 1116, so that the first electrode plate 111 forms the first receptacle 1111 shown in FIG. 10.

Further, a second receptacle 1121 is created on the second electrode plate 112. Along the stacking direction Z of the first electrode plates 111 and the second electrode plates 112, a projection of the second receptacle 1121 at least partially overlaps a projection of the first receptacle 1111. The first electrode plate 111 and the second electrode plate 112 are of opposite polarities. For example, the first electrode plate 111 is a negative electrode plate, and the second electrode plate 112 is a positive electrode plate; or, the first electrode plate 111 is a positive electrode plate, and the second electrode plate 112 is a negative electrode plate. After the electrochemical device 1 is charged and discharged repeatedly for a plurality of cycles, the negative electrode plate expands along the direction Z. For lack of a clearance between the first bonding piece 12 and the inner surface of the package 13, the expanded negative electrode plate pushes the first bonding piece 12 to move along the direction Z, thereby being prone to form a bulge on the outer surface of the package 13 at the first bonding piece 12. Therefore, by disposing the second receptacle 1121 and making the projection of the second receptacle 1121 at least partially overlap the projection of the first receptacle 1111 along the direction Z, the second receptacle 1121 can avoid at least a part of the first receptacle 1111 when the negative electrode plate expands. In this way, the first bonding piece 12 accommodated in this part of the first receptacle 1111 is prevented from bulging toward the package 13, thereby reducing the area of the bulge formed on the outer surface of the package 13 at the first bonding piece 12.

Further, along the stacking direction Z of the first electrode plates 111 and the second electrode plates 112, the projection of the first receptacle 1111 lies within the projection of the second receptacle 1121. Therefore, when the negative electrode plate expands, the second receptacle 1121 can avoid the first receptacle 1111, thereby reducing the risk that the first bonding piece 12 accommodated in the first receptacle 1111 squeezes the package 13, and in turn, reducing the risk of forming a bulge on the outer surface of the package 13 at the first bonding piece 12.

Further, the second receptacle 1121 is created on a second electrode plate 112 adjacent to the first electrode plate 111 on which the first receptacle 1111 is created, so that the first receptacle 1111 and the first bonding piece 12 can be directly accommodated into the second receptacle 1121, thereby reducing the risk of forming a bulge on the outer surface of the package 13 at the first bonding piece 12. In addition, because the first electrode plate 111 is thinned at a part provided with the first receptacle 1111, the second receptacle 1121 also thins the second electrode plate 112 at a part corresponding to the part of the first electrode plate 111 at which the first receptacle 1111 is provided, thereby reducing the risk that some ions are precipitated due to an imbalance between the number of anions and the number of cations at the first receptacle 1111 of the battery cell body 11.

In some embodiments, along the stacking direction Z of the first electrode plates 111 and the second electrode plates 112, the depth of the first receptacle 1111 is greater than or equal to 2/3 of the thickness of the first bonding piece 12 and less than or equal to the thickness of the first bonding piece 12. In other words, when the first surface of the first bonding piece 12 is affixed to the bottom of the first receptacle 1111, the second surface of the first bonding piece 12 can protrude from the outer surface of the first electrode plate 111 on the terminating coil, so as to make it convenient to bond and fix the first bonding piece 12 to the inner surface of the package 13.

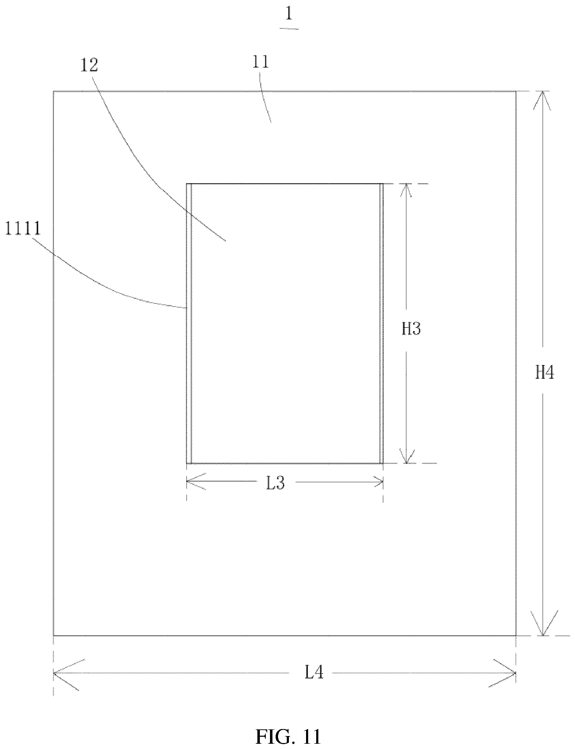

In some embodiments, referring to FIG. 11, along the stacking direction Z of the first electrode plates 111 and the second electrode plates 112, the width L3 of a projection of the first receptacle 1111 is greater than or equal to 1/3 of the width L4 of a projection of the battery cell body 11, and the length H3 of a projection of the first receptacle 1111 is greater than or equal to 1/3 of the length H4 of a projection of the battery cell body 11. The maximum length of the first bonding piece 12 may be the same as the length H3 of the first receptacle 1111. The maximum width of the first bonding piece 12 may be the same as the width L3 of the first receptacle 1111. Therefore, a sufficient bonding area is ensured for bonding and fixing the first bonding piece 12 to the inner surface of the package 13, thereby ensuring the stability of the fixation between the first bonding piece 12 and the package 13.

In this embodiment, a first receptacle 1111 is created on the outermost first electrode plate 111, and the first bonding piece 12 is at least partially accommodated in the first receptacle 1111. A second receptacle 1121 is created on the second electrode plate 112. Along the direction Z, the projection of the first receptacle 1111 at least partially overlaps the projection of the second receptacle 1121. In this way, when the negative electrode plate expands, an overlapping part of the first receptacle 1111 that overlaps the second receptacle 1121 and the first bonding piece 12 accommodated in this part of the first receptacle 1111 can be accommodated into the second receptacle 1121, thereby reducing the risk of forming a bulge on the outer surface of the package 13 at the first bonding piece 12.

### Embodiment 6

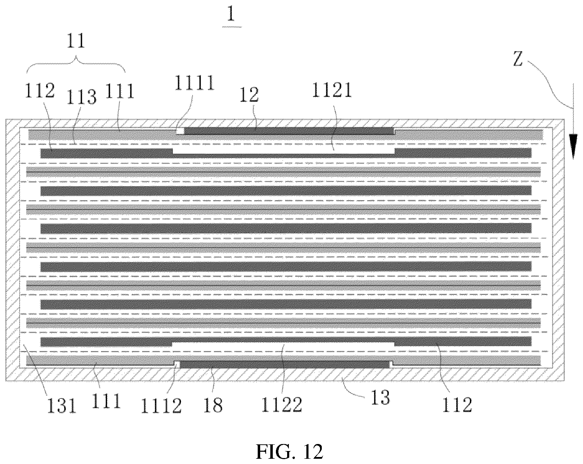

Referring to FIG. 12, Embodiment 6 differs from Embodiment 5 in that: the two electrode plates located outermost are both first electrode plates 111; the first receptacle 1111 is created on one of the outermost first electrode plates 111; a third receptacle 1112 is further created on the other of the outermost first electrode plates 111; a fourth receptacle 1122 is created on a second electrode plate 112 adjacent to the other outermost first electrode plate 111; and, along the stacking direction Z of the first electrode plates 111 and the second electrode plates 112, the projection of the third receptacle 1112 lies within the projection of the fourth receptacle 1122. The electrochemical device 1 further includes a third bonding piece 18. The third bonding piece 18 is at least partially accommodated in the third receptacle 1112. The first bonding piece 111 and the third bonding piece 18 are configured to jointly bond and fix the battery cell body 11 into the package 13. The fourth receptacle 1122 is configured to avoid the third receptacle 1112 and the third bonding piece 18, so as to reduce the risk of forming a bulge on the outer surface of the package 13 at the third bonding piece 18 when the negative electrode plate expands.

It is worth noting that, referring to FIG. 13, the other first electrode plate 111 located outermost on the battery cell body 11 includes just a substrate 1113 and a second current collector 1115. A second groove 1117 is created on the second current collector 1115 of the other outermost first electrode plate 111. The substrate 1113 of the other outermost first electrode plate 111 constitutes another outer surface of the battery cell body 11. The third bonding piece 18 is bonded and fixed to the substrate 1113 of the other outermost first electrode plate 111. Along the thickness direction X of the battery cell body 11, the projection of the third bonding piece 18 fully lies within the projection of the second groove 1117. When the battery cell body 11 is charged and discharged, the negative electrode plate expands in volume. Consequently, the first electrode plate 111 squeezes the third bonding piece 18 toward the inner surface of the package 13. Under the action of the package 13 and the third bonding piece 18, the substrate 1113 of the other outermost first electrode plate 111 gradually sinks into the second groove 1117, so that the first electrode plate 111 forms the second receptacle 1112 shown in FIG. 12. In this embodiment, with the third receptacle 1112 disposed, the third bonding piece 18 is at least partially accommodated in the third receptacle 1112. The first bonding piece 111 and the third bonding piece 18 are configured to jointly bond and fix the battery cell body 11 to the package 13, thereby improving the stability of the fixation between the battery cell body 11 and the package 13.

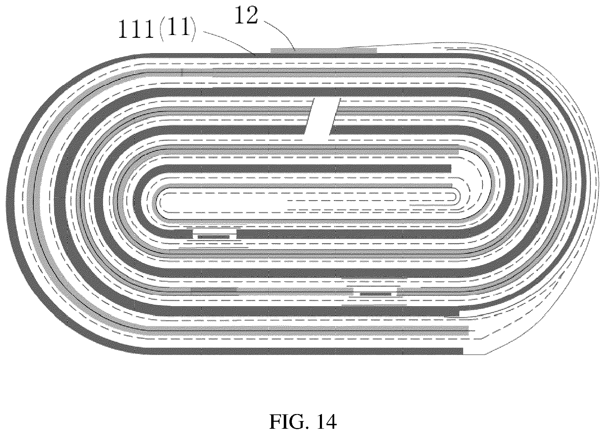

For better understanding of the concept of some embodiments of this application, the following experiments are conducted to verify Comparative Embodiment 1, Embodiment 1, Embodiment 3, and Embodiment 5:
Comparative Embodiment 1 differs from Embodiment 1 in that, as shown in FIG. 14, in Comparative Embodiment 1, no first receptacle is disposed, and the first bonding piece 12 is directly affixed to the terminating coil of the first electrode piece 111, so that the battery cell body 11 is bonded and fixed to the package by the first bonding piece 12.

The test conditions are as follows: in a 15 °C to 25 °C environment, the electrochemical device is dropped from a height of 1.5 meters to the floor for two rounds. In the first round of dropping, the six surfaces of the electrochemical device face downward respectively. In the second round of dropping, the corners of the electrochemical device face downward respectively.

The experimental method is to observe whether the appearance of the electrochemical device is damaged by the dropping and whether the battery cell body wobbles relative to the package, and record the voltage drop of the electrochemical device at the 24^{th} hour after the drop test compared to the voltage before the drop test. The number of specimens of the electrochemical devices is 10 in Comparative Embodiment 1, Embodiment 1, Embodiment 3, and Embodiment 5, separately. Referring to Table 1, as can be seen from Table 1, the voltage drop of all electrochemical devices is less than 50 millivolts, and no battery cell body wobbles relative to the package in such embodiments. However, evidently, the number of damaged packages in Embodiment 1 is less than that in Comparative embodiment 1, the number of damaged packages in Embodiment 3 is less than that in Embodiment 1, and the number of damaged packages in Embodiment 5 is the same as that in Embodiment 3. In other words, with the first receptacle disposed, at least a part of the first bonding piece is accommodated in the first receptacle, thereby also reducing the risk of damage to the package after dropping.

**Table 1**

| Group | Number of specimens with voltage drop less than 50 mV | Number of specimens with damaged package | Number of specimens with battery cell body wobbling against package |
|---|---|---|---|
| Comparative Embodiment 1 | 10 | 6 | 0 |
| Embodiment 1 | 10 | 4 | 0 |
| Embodiment 3 | 10 | 3 | 0 |
| Embodiment 5 | 10 | 3 | 0 |

This application further provides an electrical device. The electrical device includes the electrochemical device disclosed above. The specific structure and functionality of the electrochemical device may be learned by referring to the above embodiments, the details of which are omitted herein.

What is described above is merely some embodiments of this application, and does not limit the patent scope of this application in any way. All equivalent structural variations and equivalent process variations made by using the content of the specification and the drawings of this application, and the content hereof used directly or indirectly in other related technical fields, still fall within the patent protection scope of this application.

## Claims

1. An electrochemical device (1), comprising a package (13) and a battery cell body (11), wherein the battery cell body (11) is accommodated in the package (13); **characterized in that**
a first receptacle (1111) is created on an outer surface of the battery cell body (11), the electrochemical device (1) further comprises a first bonding piece (12), the first bonding piece (12) is at least partially accommodated in the first receptacle (1111), and the first bonding piece (12) is bonded and fixed to an inner surface of the package (13) and the battery cell body (11).

2. The electrochemical device (1) according to claim 1, **characterized in that**
the first bonding piece (12) comprises a first adhesive layer (121), a substrate, and a second adhesive layer (123); the first adhesive layer (121) and the second adhesive layer (123) are fixed to two surfaces of the substrate respectively, the first adhesive layer (121) is bonded and fixed to the battery cell body (11), and the second adhesive layer (123) is bonded and fixed to the package (13).

3. The electrochemical device (1) according to claim 2, **characterized in that** the second adhesive layer (123) is hot-melt adhesive.

4. The electrochemical device (1) according to claim 1, **characterized in that**
the battery cell body (11) comprises a first electrode plate (111), a separator (113), and a second electrode plate (112); the first electrode plate (111), the separator (113), and the second electrode plate (112) are stacked in sequence and then wound together; an outer surface of the first electrode plate (111) on a terminating coil constitutes a part of the outer surface of the battery cell body (11); the first receptacle (1111) is created on the outer surface of the first electrode plate (111) on the terminating coil; and the outer surface of the first electrode plate (111) on the terminating coil is a surface of the first electrode plate (111) on the terminating coil, the surface being oriented away from the second electrode plate (112).

5. The electrochemical device (1) according to claim 4, **characterized in that**
a second receptacle (1121) is created on the second electrode plate (112);
along a thickness direction (X) of the battery cell body (11), a projection of the second receptacle (1121) at least partially overlaps a projection of the first receptacle (1111);
along the thickness direction (X) of the battery cell body (11), the first receptacle (1111) and the second receptacle (1121) are located on a same side of the second electrode plate (112) on a starting coil.

6. The electrochemical device (1) according to claim 5, **characterized in that**
the second receptacle (1121) is created at a terminating coil of the second electrode plate (112).

7. The electrochemical device (1) according to claim 5, **characterized in that**
along the thickness direction (X) of the battery cell body (11), a projection of the first receptacle (1111) lies within a projection of the second receptacle (1121).

8. The electrochemical device (1) according to claim 4, **characterized in that**
the battery cell body (11) further comprises a second bonding piece (14), and the second bonding piece (14) is bonded and fixed to a terminating end of the terminating coil of the first electrode plate (111) and the first bonding piece (12) separately.

9. The electrochemical device (1) according to claim 4, **characterized in that**
the battery cell body (11) comprises a planar portion (16), a first arc-shaped portion (15), and a second arc-shaped portion (17); and
along a width direction of the battery cell body (11), the planar portion (16) is located between the first arc-shaped portion (15) and the second arc-shaped portion (17), and the first receptacle (1111) is located on the planar portion (16).

10. The electrochemical device (1) according to claim 1, **characterized in that**
the battery cell body (11) comprises a plurality of first electrode plates (111), a plurality of separators (113), and a plurality of second electrode plates (112); the first electrode plates (111) and the second electrode plates (112) are stacked alternately; and one first electrode plate (111) and one second electrode plate (112) that are adjacent to each other are interspaced with one separator (113); and
along a stacking direction of the first electrode plates (111) and the second electrode plates (112), an electrode plate located outermost on the battery cell body (11) is an outermost first electrode plate (111), and the first receptacle (1111) is created on the outermost first electrode plate (111).

11. The electrochemical device (1) according to claim 10, **characterized in that**
a second receptacle (1121) is created on the second electrode plate (112);
along the stacking direction of the first electrode plates (111) and the second electrode plates (112), a projection of the second receptacle (1121) at least partially overlaps a projection of the first receptacle (1111).

12. The electrochemical device (1) according to claim 11, **characterized in that**
the second receptacle (1121) is created on a second electrode plate (112) closest to the outermost first electrode plate (111).

13. The electrochemical device (1) according to any one of claims 1 to 12, **characterized in that**
along a thickness direction (X) of the battery cell body (11), a width of a projection of the first receptacle (1111) is greater than or equal to 1/3 of a width of a projection of the battery cell body (11); and/or
along a thickness direction (X) of the battery cell body (11), a length of a projection of the first receptacle (1111) is greater than or equal to 1/3 of a length of a projection of the battery cell body (11).

14. The electrochemical device (1) according to claim 13, **characterized in that**
a depth of the first receptacle (1111) is greater than or equal to 2/3 of a thickness of the first bonding piece (12) and less than or equal to the thickness of the first bonding piece (12).

15. The electrochemical device (1) according to claim 13, **characterized in that**
a length of the first bonding piece (12) is not greater than a length of the first receptacle (1111), and a width of the first bonding piece (12) is not greater than a width of the first receptacle (1111).

16. An electrical device, **characterized in that** the electrical device comprises the electrochemical device (1) according to any one of claims 1 to 15.
